# EUROPÄISCHE PATENTSCHRIFT

(11) **EP 3 489 085 B1**
(45) Veröffentlichungstag und Bekanntmachung des Hinweises auf die Patenterteilung: **29.12.2021**
(21) Anmeldenummer: 17203070.2
(22) Anmeldetag: 22.11.2017
(51) Int. Cl.: B60Q 1/115, B60Q 11/00, B60Q 1/076, H02P 8/08

(54) **VERFAHREN ZUM VERSTELLEN EINER STELLEINRICHTUNG**
METHOD FOR ADJUSTING A POSITIONING DEVICE
PROCÉDÉ DE RÉGLAGE D'UN DISPOSITIF DE COMMANDE

(43) Veröffentlichungstag der Anmeldung: 29.05.2019
(73) Patentinhaber: ZKW Group GmbH, 3250 Wieselburg (AT)
(72) Erfinder: Teufl, Adolf, 3300 Amstetten (AT); Kefer, Andreas, 3252 Petzenkirchen (AT); Brandl, Günther, 3250 Wieselburg (AT)
(74) Vertreter: Patentanwaltskanzlei Matschnig & Forsthuber OG

(56) Entgegenhaltungen:
- EP-A1- 2 128 589
- EP-A2- 1 130 762
- EP-A2- 1 243 468
- DE-A1- 4 139 906
- DE-A1- 4 426 971
- DE-A1- 10 045 038
- DE-A1- 10 101 055
- DE-A1- 19 534 870
- DE-A1-102005 055 910
- DE-A1-102006 020 058
- DE-A1-102006 035 086
- DE-T2- 60 304 410
- JP-A- 2010 015 888
- US-A1- 2010 091 505

## Beschreibung

Die Erfindung betrifft ein Verfahren zum Verstellen einer Stelleinrichtung einer Komponente eines Kraftfahrzeugscheinwerfers, wobei die Stelleinrichtung von einem Stellmotor angetrieben ist, der dazu eingerichtet ist, zum Ausführen einer gewünschten Positionsänderung eine Verstellbewegung im Ausmaß eines Verfahrweges, der der Positionsänderung entspricht, zu bewirken.

Außerdem betrifft die Erfindung eine Verwendung des Verfahrens, sowie eine Leuchtweitenregelungs-Vorrichtung eines Kraftfahrzeugscheinwerfers.

Im diesem Zusammenhang kann die genannte Komponente des Kraftfahrzeugscheinwerfers beispielsweise eine Anordnung einer Leuchtweitenregelung eines Lichtmoduls oder einer Beleuchtungsvorrichtung sein.

Moderne Fahrzeugscheinwerfer verfügen häufig über eine Einstellmöglichkeit der Leuchtweite des vor ein Fahrzeug projizierten Leuchtbilds. Durch eine elektronische Regelung lässt sich die Leuchtweite auch automatisch regeln, um besondere Lichtfunktionen des Fahrzeugscheinwerfers in Form einer Leuchtweitenregelung zu realisieren.

Die Anmelderin hat bei Lichtvermessungen im Zusammenhang mit einer Leuchtweitenregelung eines Scheinwerfers festgestellt, dass bestimmte Positionen für die Leuchtweite nicht mit der geforderten Genauigkeit erreicht werden konnten.

Aus DE 44 26 971 A1 ist ein Verfahren und eine Vorrichtung zur Positionierung einer Verstelleinrichtung in einem Fahrzeug bekannt. Zum Kompensieren Schrittmotor- und/oder konstruktionsbedingter Abweichungen der Positionierung von einer gewünschten Verstellkennlinie wird ein Steuerwert der Steuerung korrigiert, z.B. durch Addition eines Korrekturwerts zum berechneten Positionswert.

Es ist eine Aufgabe der Erfindung die Nachteile im Stand der Technik zu überwinden.

Die gestellte Aufgabe wird durch ein Verfahren der eingangs genannten Art gelöst, bei dem in dem Falle, dass die Positionsänderung im Vergleich zu einer unmittelbar vorhergehenden Positionsänderung mit einer Richtungsumkehr der Verstellbewegung einhergeht, ein gesamter Verfahrweg durchlaufen wird, der gegenüber dem der Positionsänderung entsprechenden Verfahrweg um einen Zusatzweg erhöht ist. Dadurch kann erreicht werden, dass der bei einer Bewegungsumkehr eines Schrittmotors verursachte Bewegungsfehler in Form einer Hysterese kompensiert werden kann. Deshalb lässt sich eine Einstellung der Leuchtweite eines Scheinwerfers wesentlich präziser einstellen, als mit einer Einstellvorrichtung nach dem Stand der Technik.

Eine mechanische Einstellung des Scheinwerfers erfolgt üblicherweise nach einem dem Einmessvorgang des Motors. Dadurch werden alle Positionen, welche die gleiche Bewegungsrichtung haben wie der Abschluss des Einmessvorganges (im Normalfall von unten nach oben), mit einer sehr hohen Genauigkeit erreicht. Bewegungen allerdings, die gegen diese Bewegungsrichtung laufen (im Normalfall von oben nach unten), unterliegen häufig einer höheren Toleranz.

Bei der Verstellung eines Scheinwerfersystems mittels eines Motors, im Speziellen eines Schrittmotors, kann es bei einer Bewegungsumkehr deshalb zu einem Hysterese-Effekt kommen, wobei die ursprünglich angesteuerte Position einer Leuchtweite nicht genau genug erreicht wird. Dieser Effekt entsteht durch das Spiel im Motor und der angebundenen Mechanik und kann durch eine "Hysterese" in einem elektronischen System beschrieben beziehungsweise nachgebildet werden.

Der Hysterese-Effekt kann durch konstruktive bzw. mechanische Aspekte, aber auch durch sich ändernde Material-Eigenschaften der Vorrichtung hervorgerufen sein, welche sich beispielsweise über die Zeit ändern. Außerdem kann der Hysterese-Effekt durch Betriebs- oder Umgebungseinflüsse, wie sie beispielsweise durch Witterung, Temperatur, etc., hervorgerufen sein und unerwünscht auf die mechanische Konstruktion des Scheinwerfersystem, oder Teile davon, einwirken.

Das erfindungsgemäße Verfahren sieht zudem vor, dass der Zusatzweg vorab in einem Einmessvorgang bestimmt wird, bei welchem der Stellmotor ausgehend von einer Anfangsposition in Form eines Ist-Werts IST-MIN solange um einen Verfahrweg im Ausmaß eines vorgegebenen Mindestwegs in eine erste Richtung R1 verstellt wird und dabei jede so erreichte Position mit einem Soll-Wert SOLL-R1 sowie einem entsprechenden Ist-Wert IST-R1 für die erste Richtung erfasst und vorzugsweise gespeichert wird, bis eine Maximalposition IST-MAX erreicht ist, sodann der Stellmotor um einen Verfahrweg gemäß dem Mindestweg solange in einer zu der ersten Richtung R1 entgegengesetzten Richtung R2 zurückgestellt wird und dabei jede so erreichte Position mit einem Soll-Wert SOLL-R2 sowie einem entsprechenden Ist-Wert IST-R2 erfasst wird und vorzugsweise gespeichert wird, bis eine Minimalposition IST-MIN erreicht ist, und für jede so erreichte Ist-Position IST-R1 und IST-R2 des Stellmotors bzw. der Stelleinrichtung Differenzen gegenüber den entsprechenden Soll-Positionen SOLL-R1 und SOLL-R2 bestimmt werden. Dadurch wird erreicht, dass die Hysterese der Bewegung bei einer Einstellung des Scheinwerfers erfasst wird und bei neuerlichen Einstellungen der Leichtweite des Kraftfahrzeugscheinwerfers berücksichtigt wird, ohne dass bei jedem Verfahrschritt eine Erfassung des Bewegungsfehlers durchgeführt werden muss.

Es kann auch vorgesehen sein, dass der Einmessvorgang in bestimmten Zeitabständen wiederholt wird, beispielsweise bei einer Durchführung einer jährlichen Wartung des Kraftfahrzeugs. Dabei können die abgespeicherten Hysterese-Daten aus einem vorhergehenden Einmessvorgang aktualisiert beziehungsweise im Speicher überschrieben werden.

Gemäß der Erfindung werden aus den Differenzen zwischen den erfassten Soll-Werten SOLL-R1 bzw. SOLL-R2 und den entsprechenden Ist-Werten IST-R1 bzw. IST-R2 für die erste, Aufwärts-Richtung R1 und die zweite, Abwärts-Richtung R2 jeweils ein Wert für den Differenzen entsprechenden Verfahrwege jeweils als Zusatzweg für nachfolgende Positionsänderungen in einem Speicher gespeichert, und beim Ausführen des Verfahrens der Zusatzweg aus dem Speicher abgerufen wird. Dadurch kann erreicht werden, dass die Genauigkeit beim Anfahren bestimmter Positionen für die Leuchtweite durch den Schrittmotor besonders hoch ist.

Es ist auch vorteilhaft, wenn die Differenzen zwischen den erfassten Soll-Werten SOLL-R1 bzw. SOLL-R2 und den entsprechenden Ist-Werten IST-R1 bzw. IST-R2 für die erste, Aufwärts-Richtung R1 und die zweite, Abwärts-Richtung R2 und jeweils eine Repräsentation der Differenzen ermittelt wird, vorzugsweise ein Mittelwert oder eine Interpolationsfunktion jeweils für die erste, Aufwärts-Richtung R1 und die zweite, Abwärts-Richtung R2, wobei die der Repräsentation der Differenzen entsprechenden Verfahrwege als Repräsentation der Zusatzwege für nachfolgende Positionsänderungen gespeichert werden, und beim Ausführen des Verfahrens die Repräsentation der Zusatzwege aus dem Speicher abgerufen wird und der jeweilige Zusatzweg aus der Repräsentation der Zusatzwege bestimmt wird.

Dadurch kann erreicht werden, dass die Genauigkeit beim Anfahren bestimmter Positionen für die Leuchtweite durch den Schrittmotor gut ist, und zusätzlich Speicher zum Speichern der ermittelten Differenzen reduziert wird.

Durch einen entsprechend dem mechanischen System anpassbaren Parameter im Steuergerät (in der Steuereinheit des Schrittmotors) soll diese Hysterese ausgeglichen werden. Dabei wird bei jeder Bewegungsumkehr des Motors einmal der konfigurierte Parameter zum Verfahrweg des Motors addiert.

Gemäß der Erfindung wird der Einmessvorgang bei verschiedenen Betriebstemperaturen oder Umgebungstemperaturen des Kraftfahrzeugscheinwerfers durchgeführt, wobei mehrere Hysterese-Datensätze, das heißt die Repräsentationen der Zusatzwege, welche jeweils von einem Betriebsparameter oder vom Wert eines Betriebsparameters des Fahrzeugs, d.h. der Betriebs- bzw. Umgebungstemperatur, in welchem der Kraftfahrzeugscheinwerfer montiert ist, abhängig sind und in dem Speicher gespeichert werden. Entsprechend einem während des Betriebs des Fahrzeugs jeweils vorliegenden Betriebszustand oder dem Wert des Betriebsparameters des Fahrzeugs wird die mit dem Betriebsparameter verbundene eine Repräsentation des Zusatzwegs von dem Speicher abgerufen.

Betriebsparameter können beispielsweise auch der Beladungszustand des Fahrzeugs sein. Ferner kann ein Betriebsparameter beispielsweise ein Dämpfungsparameter einer Luftfederung des Fahrzeugs sein. Die durch die Luftfederung einstellbare Dämpfung des Fahrzeugs kann sich in Vibrationen, welche auf den Scheinwerfer oder Teile davon während des Betriebs einwirken, äußern.

Dadurch ist es beispielsweise möglich, für unterschiedliche Betriebstemperaturen verschiedene Hysteresen im Speicher zu hinterlegen. Nach Feststellung eines Betriebszustands des Fahrzeugs, beispielsweise der Betriebs- oder Umgebungstemperatur, kann eine dem Betriebszustand entsprechende Hysterese aus dem Speicher abgerufen werden und im erfindungsgemäßen Verfahren verwendet werden.

Es kann auch vorgesehen sein, dass für Kombinationen mehrerer Betriebsparameter bzw. für bestimmte Werte der Betriebsparameter jeweils ein entsprechender Datensatz gespeichert ist. Der Abruf eines solchen Datensatzes mit der Repräsentation des Zusatzwegs erfolgt dann durch die Bestimmung aller relevanten Betriebsparameter und einer, der Kombination der Betriebsparameter entsprechenden Datensatz-Abfrage aus dem Speicher.

Es ist besonders günstig, wenn der Einmessvorgang bei verschiedenen Betriebstemperaturen oder Umgebungstemperaturen des Kraftfahrzeugscheinwerfers durchgeführt wird, da die Betriebstemperatur besonders stark auf die mechanische Anordnung eines Kraftfahrzeugscheinwerfers einwirkt, was zu einer unerwünschten Verstellung der Anordnung führen kann.

Es ist ferner günstig, wenn der Kraftfahrzeugscheinwerfer einen Tragrahmen umfasst, wobei die Stelleinrichtung zum Verstellen/Verschwenken des Tragrahmens mit einem im Tragrahmen gelegenen Aufnahmeelement gelenkig verbunden ist. Dadurch kann erreicht werden, dass eine Verstellbewegung des Tragrahmens einfach durchgeführt werden kann und die Verstellbewegung einfach auf ein Lichtmodul oder eine Projektionslinse angewandt wird.

Es ist besonders günstig, wenn das Aufnahmeelement durch ein im Wesentlichen U-förmiges, längs erstrecktes Profil gebildet ist und geeignet ist, einen Kopf der durch eine Stellstange mit dem Stellmotor verbunden ist, formschlüssig aufzunehmen und das U-förmige Profil in dessen Längserstreckung in der Einbauposition des Kraftfahrzeugscheinwerfers in einem Fahrzeug im Wesentlichen vertikal ausgerichtet ist. Dadurch kann ein besonders einfach konzipiertes Aufnahmeelement erreicht werden, welches kostengünstig herstellbar ist.

Es ist auch günstig, wenn das Aufnahmeelement eingerichtet ist, bei einer Positionsänderung des Stellmotors den Kopf der Stelleinrichtung vertikal innerhalb des U-förmigen Profils des Aufnahmeelements aufwärts oder abwärts zu bewegen. Dadurch kann ein besonders einfach konzipiertes Aufnahmeelement erreicht werden, welches kostengünstig herstellbar ist.

Außerdem ist es vorteilhaft, wenn der Tragrahmen mit dem Fahrzeug über eine Aufhängung drehbar beziehungsweise gelenkig verbunden ist. Dadurch kann eine besonders einfach konzipierte Aufhängung erreicht werden, welche kostengünstig herstellbar ist.

Die Aufgabe der Erfindung wird auch durch eine Verwendung des erfindungsgemäßen Verfahrens für die Durchführung einer Verstellbewegung einer Komponente einer Leuchtweitenregelung eines Kraftfahrzeugscheinwerfers gelöst.

Die Aufgabe der Erfindung wird außerdem durch eine Leuchtweitenregelungs-Vorrichtung eines Kraftfahrzeugscheinwerfers gelöst, welche eingerichtet ist, eine erfindungsgemäße Verstellbewegung auszuführen. Dadurch kann eine Vorrichtung geschaffen werden, die die Vorzüge des erfindungsgemäßen Verfahrens besonders vorteilhaft nutzt, da auf eine besonders einfache Art und Weise die Leuchtweite eines Fahrzeugscheinwerfers besonders genau eingestellt werden kann.

Die Erfindung samt weiteren Vorzügen wird im Folgenden anhand von Ausführungsbeispielen näher beschrieben, welche in den beigefügten Zeichnungen illustriert sind und das Einstellen eines Tragrahmens für ein Lichtmoduls eines Fahrzeugscheinwerfers betreffen. Die Zeichnungen zeigen in schematischer Form:
- Fig. 1: eine verstellbare Anordnung zum Einstellen eines Lichtmoduls gemäß einem ersten Ausführungsbeispiel in einer perspektivischen Ansicht;
- Fig. 1a: eine verstellbare Anordnung zum Einstellen eines Lichtmoduls gemäß einem zweiten Ausführungsbeispiel in einer perspektivischen Ansicht;
- Fig. 2: eine Detailansicht des Stellantriebs der Fig. 1a in Draufsicht;
- Fig. 3: eine Detailansicht des Stellantriebs wie in Fig. 1a, jedoch in zerlegtem Zustand;
- Fig. 4: eine Ablaufdiagramm der Korrektur bei Bewegungen der Leuchtweitenregelung während des Betriebs der Anordnung in einem Scheinwerfersystem eines Fahrzeugs;
- Fig. 5: ein Ablaufdiagramm der Ermittlung und Speicherung des Abweichungswertes aufgrund des mechanischen Spiels der Gesamtanordnung und der elektrischen Hysterese des Antriebsmotors; und
- Fig. 6: die mechanische und elektrische Hysterese des Stellmotors;
- Fig. 7: ein Blockschaltbild des Fahrzeugscheinwerfers.

Das in den Zeichnungen gezeigte und nachstehend diskutierte Ausführungsbeispiel dient als Beispiel zur Erläuterung der Erfindung und ist nicht als einschränkend auszulegen.

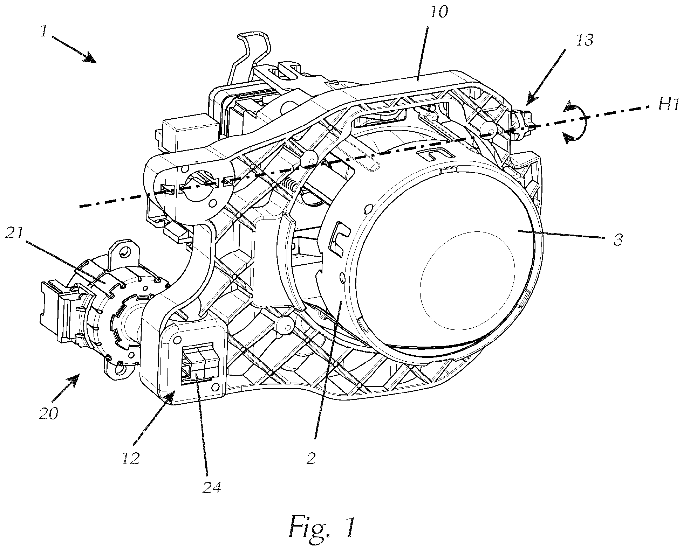

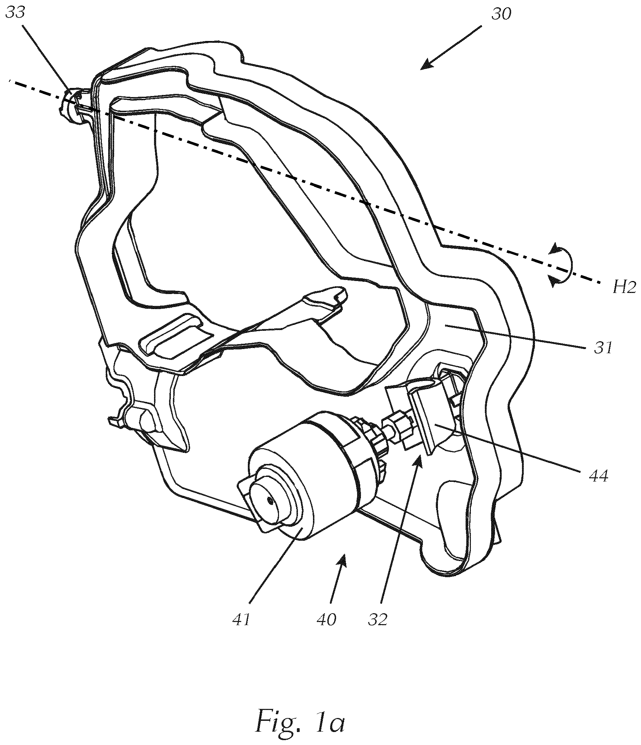

Fig. 1 zeigt ein Beispiel eines Fahrzeugscheinwerfers 1, der eine Lichtquelle (nicht sichtbar) und ein Lichtmodul 2 mit einer Projektionslinse 3, welche in einer Ausnehmung einer ersten Ausführungsform eines Tragrahmens 10 befestigt ist, umfasst. Der Tragrahmen 10 weist eine erste Aufhängung 13 auf, durch die der Tragrahmen 10 beispielsweise mit einem Gehäuse des Fahrzeugscheinwerfers 1 in einer Einbaulage um eine horizontale orientierte Drehachse H1 des Fahrzeugscheinwerfers 1 drehbar verbunden werden kann. Außerdem weist der Tragrahmen 10 in einem radialen Abstand von der Drehachse H1 eine Aufnahme 12 auf, über die eine Stelleinrichtung 20 den Tragrahmen 10 bewegen kann, indem eine Linearbewegung der Stelleinrichtung 20 quer zur Drehachse H1 ausgeführt und so eine Drehung des Tragrahmens 10 um die Drehachse H1 bewirkt werden kann.

Die so erwirkte Drehbewegung soll eine Drehung des vom Fahrzeugscheinwerfer 1 durch die Projektionsoptik 2 projizierte Lichtbild um die horizontale Achse H1 bewirken, und dadurch ermöglichen, die Leuchtweite des durch den Fahrzeugscheinwerfer 1 projizierten Lichtbilds zu variieren. Für eine solche Leuchtweitenregelung ist es ausreichend, eine Drehung nur innerhalb geringer Winkel, beispielsweise unter 10°, bevorzugt unter 5°, durchzuführen. Folglich ist es ausreichend, wenn die Aufnahme 12 konstruktiv eher einfach ausgelegt ist, um eine Konvertierung einer Linearbewegung der Stelleinrichtung 20 in eine Drehbewegung des Tragrahmens 10, der ein Lichtmodul 2 mit der Projektionslinse 3 hält, auszuführen.

Die Stelleinrichtung 20 umfasst einen Stellmotor 21 und eine damit verbundene Stellstange, die einen Kopf aufweist, welcher in einem Aufnahmeelement 24 gelagert ist. Das Aufnahmeelement 24 ist in einer Aufnahme 12 des Tragrahmens 10 fixiert.

Fig. 1a zeigt eine weitere Ausführungsform eines Tragrahmens 30, welcher mit einer Stelleinrichtung 40 verbunden ist. Die Stelleinrichtung 40 umfasst einen Stellmotor 41 und eine damit verbundene Stellstange, die einen Kopf aufweist, welcher in einem Aufnahmeelement 44 gelagert ist. Das Aufnahmeelement 44 ist in einer Aufnahme 32 des Tragrahmens 30 fixiert. Der Tragrahmen 30 weist eine erste Aufhängung 33 auf, durch die der Tragrahmen 30 beispielsweise mit einem Gehäuse des Fahrzeugscheinwerfers um eine horizontale orientierte Drehachse H2 in einer Einbaulage des Fahrzeugscheinwerfers drehbar verbunden werden kann.

Die erste Ausführungsform des Tragrahmens 10 nach der Fig. 1, sowie die zweite Ausführungsform des Tragrahmens 30 nach der Fig. 1a unterscheidet sich durch die Ausführung des Tragrahmens, was hinsichtlich der Funktion der Leichtweitenregelung des Scheinwerfers von untergeordneter Bedeutung ist. Somit gelten die diesbezüglichen Beschreibungen gleichermaßen.

Bezugnehmend auf Fig. 1a umfasst eine verstellbare Anordnung gemäß dem Ausführungsbeispiel neben einem verstellbaren Tragrahmen 30 selbst, in dem ein (nicht gezeigtes) Lichtmodul gehalten wird, eine Stelleinrichtung 40, mit dem der Tragrahmen 30 hinsichtlich seiner Lage verstellt werden kann, z.B. kann seine Winkellage um eine horizontale Achse verschwenkbar sein. Der Tragrahmen 30 weist beispielsweise einen umrandeten Boden 31 sowie eine Aufnahme 12 zum Halten des Lichtmoduls auf und wird mit letzterem gemeinsam als Ganzes verstellt; die Aufnahme 12 ist als z.B. fensterartige Öffnung in dem Boden 31 ausgebildet, in die das Lichtmodul eingesetzt und dort festgelegt werden kann. Die Stelleinrichtung 40 zum Verstellen/Verschwenken des Tragrahmens 30, genauer eine Antriebskomponente des Stellantriebs, ist mit einem Gegenstück im Tragrahmen 30 gelenkig verbunden, sodass eine Auslenkung des Stellantriebs direkt in eine Verstellungsbewegung, z.B. Verschwenkung, des Tragrahmens 30 umgesetzt wird. Somit ist das Lichtmodul in seiner (z.B. vertikalen) Ausrichtung mithilfe der Stelleinrichtung 40 einstellbar; auf diese Weise kann beispielsweise eine Leuchtweitenregelung des Kraftfahrzeugscheinwerfers erreicht werden.

Der Tragrahmen 30 bildet eine einstellbare "Schnittstelle" zum Kraftfahrzeugscheinwerfer. Der Tragrahmen 30 kann so an den jeweiligen Scheinwerfer angepasst werden; bei Bedarf kann er auch andere Module halten, die dann mit referenziert werden können. Es ist in der Regel notwendig, die vertikale Ausrichtung des Lichtmoduls, somit die Stellung des Stellantriebs 40, zu kalibrieren. Dies ist insbesondere bei einem durch einen Schrittmotor 41 implementierten Antrieb in der Regel erforderlich, zumal ein Schrittmotor 41 häufig nur inkrementell angesteuert wird. Zur Kalibrierung wird ein Einmessvorgang durchgeführt, durch den die Positionierung der Halterung - bzw. der Leuchtweitenregelung - ermittelt wird. Auf diese Weise kann eine Nullposition bestimmt oder festgelegt werden, und nachfolgend werden von dieser Position ausgehend die Auslenkungen des Antriebs bzw. Verfahrschritte des Schrittmotors 41 gezählt, um die aktuelle Position des Antriebs / Schrittmotors zu erfassen.

Der Tragrahmen 30 kann mit dem Fahrzeug über eine Aufhängung 33 drehbar beziehungsweise gelenkig verbunden sein. Die Verstellbewegung kann somit eine Leuchtweitenregelung eines Kraftfahrzeugscheinwerfers ausführen.

Grundsätzlich ist ein Tragrahmen nicht unbedingt erforderlich, um eine Leuchtweitenregelung für einen Fahrzeugscheinwerfer zu realisieren. Beispielsweise könnte alternativ eine Umlenkeinheit mit einem Spiegel, oder eine elektronisch steuerbare Mikrospiegel-Anordnung, wie ein DLP^{®}, verwendet werden.

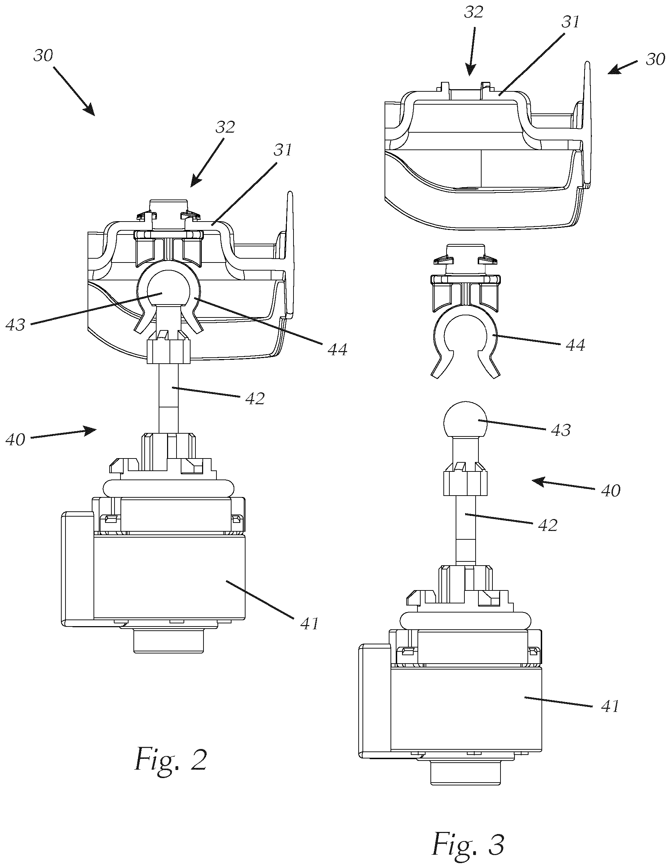

In Fig. 2 und 3 ist die Stelleinrichtung 40 dargestellt, umfassend einen Stellmotor 41, der beispielsweise als Linearmotor zum Antrieb einer zugehörenden Stellstange 42 verwirklicht ist, die die erwähnte Antriebskomponente des Stellantriebs 40 darstellt und an deren Ende ein Kopf 43 ausgebildet ist. Der Kopf 43 greift in ein Aufnahmeelement 44, das das erwähnte Gegenstück des Tragrahmens 30 verwirklicht, ein und bildet so ein Gelenk. Das Aufnahmeelement 44 für den Kopf 43 ist zugleich ein mit dem Tragrahmen 30 fest verbindbares Element. Hierzu wird es in dem Tragrahmen 30 an einer hierfür vorgesehenen Befestigungsstelle, z.B. in Form einer Öffnung im Boden 31, eingesetzt und dort arretiert, beispielsweise durch eine Rast- oder Schnappverbindung. Über den Kopf 43 ergibt sich eine gelenkige Verbindung, durch die die Linearbewegung des Stellmotors 41 in eine angetriebene Bewegung (z.B. Verschwenkung) des Tragrahmens 30 umgesetzt wird.

Das Aufnahmeelement 44 kann durch ein im Wesentlichen U-förmiges, quer zur Verstellrichtung der Stelleinrichtung 40 länglich erstrecktes Profil gebildet sein, das geeignet ist, den Kopf 43, der durch die Stellstange 42 mit dem Stellmotor 41 verbunden ist, formschlüssig aufzunehmen. Das U-förmige Profil kann in dessen Längserstreckung in der Einbauposition des Scheinwerfers in einem Fahrzeug im Wesentlichen vertikal ausgerichtet sein.

In einer Ausführungsvariante kann der Stellmotor auch eine andere Bewegungsart verwirklichen, z.B. kann er als Drehmotor eine Rotationsbewegung bewirken, die über das gelenkig angekoppelte Zwischenelement in eine Verstellbewegung des Tragrahmens umgesetzt wird. In einer anderen Ausführungsvariante kann das Gegenstück als mit dem Tragrahmen 30 einstückige Struktur, in die der Kopf 43 bzw. im Allgemeinen die Antriebskomponente eingreift, ausgebildet sein.

Das Aufnahmeelement 44 kann dazu eingerichtet sein, bei einer Positionsänderung des Stellmotors 41 den Kopf 43 der Stelleinrichtung 40 vertikal innerhalb des U-förmigen Profils des Aufnahmeelements 44 aufwärts oder abwärts zu bewegen.

Der Stellantrieb 40 weist im Allgemeinen eine Hysterese seiner Bewegung auf. Das Ausmaß der Hysterese kann sehr unterschiedlich sein. Häufig ist die Hysterese zwar klein, aber nicht vernachlässigbar. Die Hysterese kann einerseits durch Verformung und/oder Spiel der mechanischen Komponenten des Stellantriebs (z.B. Stellstange 42, Lagerung des Kopfes 43 im Aufnahmeelement 44, Lagerung des Aufnahmeelements 44 im Tragrahmen-Boden 31) verursacht werden, andererseits trägt der für einen Schrittmotor spezifische Lastwinkel zur Hysterese bei.

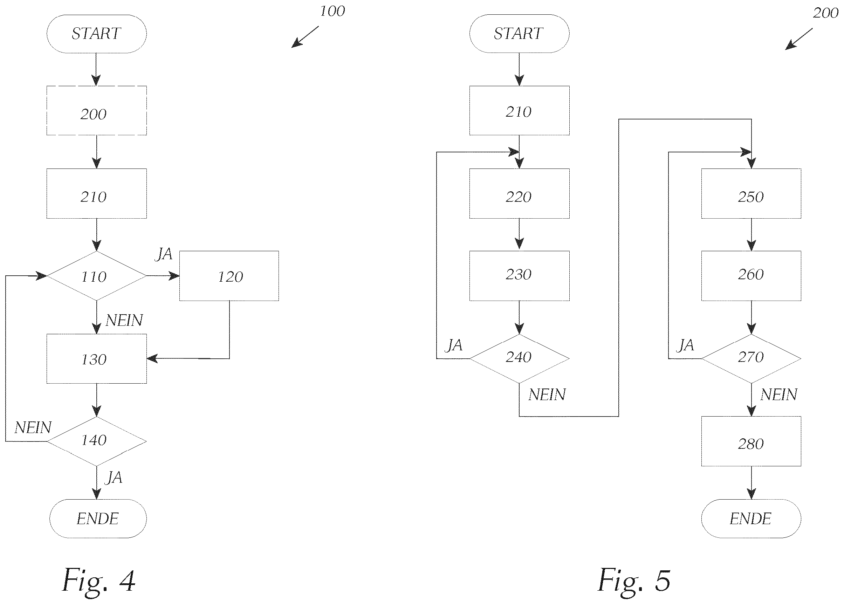

Fig. 4 zeigt ein Ausführungsbeispiel für den Ablauf zur Korrektur bei Bewegungen der Leuchtweitenregelung während des Betriebs der Anordnung in einem Scheinwerfersystem eines Fahrzeugs, in Form eines Ablaufdiagramms für ein Verfahren zum Verstellen der Stelleinrichtung 20, 40 des Kraftfahrzeugscheinwerfers 1 gemäß der Fig. 1 bis 3.

Das erfindungsgemäße Verfahren 100 zum Verstellen einer Stelleinrichtung 20, 40 einer Komponente eines Kraftfahrzeugscheinwerfers 1 wird im Weiteren genauer erläutert. In diesem Zusammenhang ist die genannte Komponente des Kraftfahrzeugscheinwerfers eine Anordnung einer Leuchtweitenregelung eines Lichtmoduls. Die Stelleinrichtung 20, 40 wird dabei von einem Stellmotor 21, 41 angetrieben, der dazu eingerichtet ist, zum Ausführen einer gewünschten Positionsänderung eine Verstellbewegung 130 im Ausmaß eines Verfahrweges, der der Positionsänderung entspricht, zu bewirken.

Das Verfahren kann von einem Mikroprozessor als Teil einer Steuereinrichtung zum Steuern der Stelleinrichtung 20, 40 des Kraftfahrzeugscheinwerfers 1 ausgeführt werden, der mit einem Speicher zum Speichern von Steuergerätedaten verbunden ist, sowie Mittel zum Ansteuern der Stelleinrichtung 20, 40 nach Fig. 1 bis 3, wie beispielsweise eine Schrittmotoransteuerung.

Die Stelleinrichtung 20, 40 ist von dem Stellmotor 21, 41 angetrieben, der dazu eingerichtet ist, zum Ausführen einer gewünschten Positionsänderung eine Verstellbewegung im Ausmaß eines Verfahrweges, der der Positionsänderung entspricht, zu bewirken.

Das Ausführungsbeispiel für das Ablaufdiagramm der Fig. 4 beschreibt den Betrieb des Kraftfahrzeugscheinwerfers 1.

Nach dem Start wird ein erster Verfahrensschritt in Form eines Einmessvorgangs 200 ausgeführt, der nachfolgend anhand der Fig. 5 näher erläutert wird.

Der Einmessvorgang 200 ist in Fig. 4 strichliert eingezeichnet, um anzudeuten, dass dieser Schritt bei einem wiederholten Verfahrensablauf optional ist.

Der Einmessvorgang 200 erfolgt lediglich einmal, beispielweise in einem Labor, in welchem die Abweichung zwischen einer Soll- und einer Ist-Position einer Stelleinrichtung für eine Leuchtweitenregelung durch entsprechende Messeinrichtungen erfasst wird. Es kann genügen, wenn der Einmessvorgang 200 für ein spezifisches Scheinwerfermodell nur exemplarisch einmal erfasst wird, und nicht mehrfach für jedes individuelle Scheinwerferexemplar des gleichen Modells.

Es kann genügen, wenn die durch den Einmessvorgang 200 ermittelten Daten in einem Speicher, welcher beispielsweise von dem Kraftfahrzeugscheinwerfer 1 umfasst ist, gespeichert werden und im Betrieb des Scheinwerfers aus dem Speicher abgerufen werden. Somit kann es vorgesehen sein, dass nach einer Montage des Scheinwerfers in einem Kraftfahrzeug im Verfahren ein weiterer Einmessvorang 200 entfällt. Das Verfahren erfolgt in diesem Fall ohne Ausführung eines weiteren Einmessvorgang 200 bei jeder Inbetriebnahme des Kraftfahrzeugscheinwerfers 1 und es werden statt dessen die aus einem, für den Scheinwerfer oder einen Scheinwerfer des gleichen Modells, vorhergehenden Einmessvorang 200 ermittelten Daten aus einem Speicher abgerufen und in den nachfolgenden Verfahrensschritten entsprechend verwendet.

Je nach Anwendung oder auch rechtlichen oder technischen Erfordernis kann es aber auch vorgesehen sein, dass der Einmessvorgang 200 öfters wiederholt wird, beispielsweise bei einer jährlichen Wartung des Scheinwerfers oder nach fahrzeugbedingten Änderungen der Montageposition. Dabei kann eine individuelle Anpassung an eine Einbauposition in einem Fahrzeug durch eine exakte Erfassung der Hysterese in Kombination mit Montageparametern erzielt werden.

Außerdem kann es vorgesehen sein, dass das Fahrzeug verschiedene Betriebszustände ausweist, beispielsweise durch Anpassungen im Fahrwerk des Fahrzeugs, oder der Beladungszustand des Fahrzeugs, welche jeweils unterschiedliche Einmessvorgänge zu Erfassung einer jeweiligen Hysterese erfordern, was zu mehreren verschiedenen Hysterese-Datensätzen führt. Über eine entsprechende Erfassung des Betriebszustands kann der jeweilig gewünschte Hysterese-Datensatz abgerufen werden.

In einem nächsten Verfahrensschritt 210 wird eine Anfangs- oder Nullposition angefahren, die einer Nullposition oder Ruheposition der Leuchtweitenregelung entspricht.

In einem nachfolgenden Schritt erfolgt eine Prüfung 110, ob eine, beispielsweise durch einen Benutzer des Fahrzeugs manuell angeforderte Verstellung der Leuchtweitenregelung zu einer Änderung der Bewegungsrichtung führt. Mit anderen Worten erfolgt die Prüfung 110, ob die Positionsänderung im Vergleich zu einer unmittelbar vorhergehenden Positionsänderung mit einer Richtungsumkehr der Verstellbewegung einhergeht.

Die Richtung der zuvor ausgeführten Bewegung ist in einem Speicher hinterlegt und wird im Schritt 110 abgerufen.

Liegt keine Änderung der Bewegungsrichtung der Stelleinrichtung 20, 40 bei der Prüfung 110 vor, so erfolgt eine Ausführung der Bewegung 130 gemäß der Bewegungsanforderung. Mit anderen Worten wird in diesem Fall keine Korrektur der Bewegung 130 durchgeführt, beziehungsweise entspricht dies einem Korrekturwert von Null.

Kommt es jedoch bei der Prüfung 110 zu einer Änderung der Bewegungsrichtung der Stelleinrichtung 20, 40 gegenüber der zuvor ausgeführten Bewegung, so wird eine Korrektur 120 durch einen Korrekturwert für einen Zusatzweg zur beabsichtigten Verstellung der Leuchtweitenregelung ermittelt, welcher im Speicher hinterlegt ist. Dies bedeutet, dass gegenüber der Positionsänderung ein entsprechender Verfahrweg um den Zusatzweg erhöht ist. Der Korrekturwert für den Zusatzweg wird durch den Einmessvorgang der Fig. 5 ermittelt und im Speicher hinterlegt.

Anschließend erfolgt eine Prüfung 140, ob eine weitere Bewegungsanforderung vorliegt. Solange eine weitere Bewegungsanforderung vorliegt, werden die Schritte 110 bis 130 wiederholt. Das Verfahren wird beendet, falls keine weitere Bewegungsanforderung vorliegt.

Fig. 5 zeigt den Ablauf zur Ermittlung und Speicherung des Abweichungswertes aufgrund des mechanischen Spiels der Gesamtanordnung und der elektrischen Hysterese des Antriebsmotors gemäß eines Ausführungsbeispiels in Form des in Fig. 4 beschriebenen Verfahrens.

Das Ausführungsbeispiel für das Ablaufdiagramm der Fig. 5 beschreibt den Einmessvorgang des Kraftfahrzeugscheinwerfers 1.

Die Vorrichtung zur Durchführung des Einmessvorganges ist eingerichtet, vorzugsweise durch eine optische Sensor- bzw. Datenerfassungseinrichtung, einen Ist-Wert IST-R1, IST-R2 eines Verfahrwegs der Stelleinrichtung 20, 40 für einem vorgegebenen Soll-Wert SOLL-R1, SOLL-R2 für den jeweiligen Verfahrweg zu bestimmen und zu speichern. Dabei kann beispielsweise eine optisch lesbare Skala auf der Stelleinrichtung angeordnet sein, deren Bewegung längs einer Verstellachse der Stelleinrichtung durch einen optischen Sensor erfasst wird.

Die Ist-Werte IST-R1 und IST-R2, sowie die Soll-Werte SOLL-R1 und SOLL-R2 stellen die jeweiligen Momentan-Werte innerhalb einer Verstellbewegung in den jeweiligen Auf- und Abwärtsbewegungen in den Richtungen R1 und R2 dar. Im Weiteren werden der Ist-Wert IST und der Soll-Wert SOLL verwendet, um die Funktionsweise des Verfahrens unabhängig von einer jeweiligen Bewegungsrichtung R1, R2 zu beschreiben. Es ist klar, dass dem IST-Wert ein IST-R1-Wert für eine Aufwärts-Richtung R1 oder ein IST-R2-Wert für eine Abwärts-Richtung R2 entspricht.

Die Werte 311, 312, 321 und 322 charakterisieren die resultierende Kennlinie des Verlaufs von Ist-Werten IST und Soll-Werten SOLL.

Es kann häufig ausreichen, dass für einen Scheinwerfertyp nur einmalig ein Einmessvorgang auf einem Prüfstand durchgeführt wird. Weitere baugleiche Scheinwerfer gleichen Typs können dann auf die durch den Einmessvorgang auf dem Prüfstand ermittelten Daten zurückgreifen. Es ist daher nicht immer unbedingt notwendig, dass vor jeder Inbetriebnahme eines Scheinwerfers ein gesonderter Einmessvorgang durchgeführt wird.

Der vorher genannte Zusatzweg wird vorab im Einmessvorgang 200 bestimmt, bei welchem der Stellmotor 21, 41 ausgehend von einer Anfangsposition in Form eines Ist-Werts IST-MIN solange um einen Verfahrweg im Ausmaß eines vorgegebenen Mindestwegs in eine erste Richtung verstellt wird und dabei jede so erreichte Position mit einem Soll-Wert SOLL-R1 sowie einem entsprechenden Ist-Wert IST-R1 für die erste Richtung erfasst und gespeichert wird, bis eine Maximalposition IST-MAX erreicht ist, sodann der Stellmotor 21, 41 um einen Verfahrweg gemäß dem Mindestweg solange in einer zu der ersten Richtung entgegengesetzten Richtung zurückgestellt wird und dabei jede so erreichte Position mit einem Soll-Wert SOLL-R2 sowie einem entsprechenden Ist-Wert IST-R2 erfasst wird und gespeichert wird, bis eine Minimalposition IST-MIN erreicht ist, und für jede so erreichte Ist-Position IST-R1 und IST-R2 des Stellmotors 21, 41 bzw. der Stelleinrichtung 20, 40 Differenzen gegenüber den entsprechenden Soll-Positionen SOLL-R1 und SOLL-R2 bestimmt werden und diesen Differenzen entsprechende Verfahrwege jeweils als Zusatzweg für nachfolgende Positionsänderungen gespeichert werden.

Der vorgegebene Mindestweg kann festgelegt sein, sodass die Hysterese möglichst präzise bestimmt wird, indem jeder Schritt des Stellmotors 21, 41 bei der Bestimmung der Hysterese berücksichtigt wird. Somit wird die Hysterese sehr detailliert ermittelt, was allerdings zu einem hohen zeitlichen Aufwand beim Einmessvorgang, aber auch zu einem entsprechend hohen Speicheraufwand beim Speichern der ermittelten Differenzen führt.

Alternativ kann der Mindestweg mehrere Schritte bzw. Schrittweiten des Schrittmotors umfassen und kann darüber hinaus auch, je nach der Position des Stellmotors 21, 41 zwischen der Anfangs- bzw. Minimalposition IST-MIN bzw. SOLL-MIN und der End- bzw. Maximalposition IST-MAX bzw. SOLL-MAX, variieren.

Der Einmessvorgang kann dahingehend weiterentwickelt werden, dass aus den vielen ermittelten Differenzen der Ist- und Soll-Werte IST-R1, IST-R2, SOLL-R1, SOLL-R2 eine Kurve durch diese Werte hindurch approximiert wird, beispielsweise durch eine approximierte, angenäherte Gerade oder ein approximiertes, angenähertes Polynom, wobei dann nur eine Repräsentation des Polynoms im Speicher abgespeichert wird, beispielsweise die Parameter der Gerade oder des Polynoms. Im weiteren Verfahren kann die Repräsentation der Gerade oder des Polynoms aus dem Speicher abgerufen werden, aus der Gerade oder dem Polynom in Folge Stützstellen berechnet werden, welche im weiteren Verfahren zur Positions-Korrektur des Stellmotors 21, 41 verwendet werden.

Der vorgegebene Mindestweg kann aber auch so festgelegt sein, sodass die Hysterese nur grob bestimmt wird. Somit wird die Hysterese durch wenige Stützwerte bestimmt, was zu einem verbesserten zeitlichen Aufwand beim Einmessvorgang, sowie zu einem reduzierten Speicheraufwand beim Speichern der ermittelten Differenzen führt. Im weiteren Verfahren können die Differenzen aus dem Speicher abgerufen werden und weitere Stützstellen interpoliert werden, beispielsweise durch eine lineare oder nicht-lineare Interpolation, welche für den gesamten Verlauf oder stückweise berechnet werden kann und welche im weiteren Verfahren zur Positions-Korrektur des Stellmotors 21, 41 verwendet werden.

In einer Weiterbildung der Erfindung kann die Hysterese festgelegt sein, indem für eine Bewegungsrichtung über alle Werte der Differenzen ein Mittelwert gebildet wird und nur ein Mittelwert für eine Bewegungsrichtung abgespeichert wird. Analog dazu erfolgt dies über die jeweils andere Bewegungsrichtung und nur diese zwei Mittelwerte werden im Speicher abgespeichert. Im weiteren Verfahren können die Differenz-Mittelwerte aus dem Speicher abgerufen und zur Positions-Korrektur des Stellmotors 21, 41 verwendet werden.

Das Ablaufdiagramm der Fig. 5 kann im Detail auch wie folgt erläutert werden:
Beim Einmessvorgang 200 wird der Stellmotor 21, 41 ausgehend von einer Anfangsposition um einen Verfahrweg gemäß einem vorgegebenen Mindestweg in eine erste Richtung verstellt. Der Mindestweg kann beispielsweise eine oder mehrere Schrittweiten eines Stellmotors 21, 41 betragen.

In einem ersten Verfahrensschritt 210 wird eine Anfangs- oder Nullposition angefahren, die einer Nullposition der Leuchtweitenregelung entspricht.

Anschließend wird durch den Verfahrensschritt 220 der Stellmotor 21, 41 der Stelleinrichtung 20, 40 um den Mindestweg in die erste Richtung R1, hier eine Aufwärtsbewegung, verstellt.

Aufgrund der so erreichten Position des Stellmotors 21, 41 bzw. der Stelleinrichtung 20, 40 wird im Verfahrensschritt 230 der Ist-Wert IST-R1 bestimmt und die Differenz gegenüber den entsprechenden Soll-Wert SOLL-R1 ermittelt und in einem Speicher gespeichert.

Dann erfolgt eine Prüfung 240, ob durch den IST-R1-Wert das Maximum des Verstellbereichs, der durch den Wert des Soll-Maximums SOLL-MAX definiert ist, erreicht ist. Trifft dies nicht zu, so werden die Schritte 220 und 230 wiederholt, sodass durch diesen Vorgang alle Positionen zwischen dem Soll-Minimum SOLL-MIN und dem Soll-Maximum SOLL-MAX für die Aufwärtsbewegung des Stellmotors 21, 41 durchlaufen werden.

Analog dazu erfolgt nun eine Umkehr der Bewegungsrichtung, indem durch den Verfahrensschritt 250 der Stellmotor 21, 41 der Stelleinrichtung 20, 40 um den Mindestweg in eine zweite Richtung R2, hier eine Abwärtsbewegung, verstellt wird. Der Mindestweg in der zweiten Richtung entspricht üblicherweise dem Ausmaß des Mindestwegs in der ersten Richtung, kann bei Bedarf aber auch anders festgelegt werden.

Aufgrund der so erreichten Position des Stellmotors 21, 41 bzw. der Stelleinrichtung 20, 40 wird im Verfahrensschritt 260 der Ist-Wert IST-R2 bestimmt und die Differenz gegenüber den entsprechenden Soll-Wert SOLL-R2 ermittelt und in einem Speicher gespeichert.

Dann erfolgt eine Prüfung 270, ob durch den IST-R2-Wert das Minimum des Verstellbereichs, der durch den Wert des Soll-Minimums SOLL-MIN definiert ist, erreicht ist. Trifft dies nicht zu, so werden die Schritte 250 und 260 wiederholt, sodass durch diesen Vorgang alle Positionen zwischen dem Soll-Maximum SOLL-MAX und dem Soll-Minimum SOLL-MIN für die Abwärtsbewegung des Stellmotors 21, 41 durchlaufen werden.

Eine Bewegung des Stellmotors der Leuchtweitenregelung nach oben kann durch eine Anordnung eines Lichtmoduls 2 mit einer Lichtquelle und einer Projektionslinse 3 des Fahrzeugscheinwerfers 1 in einer Einbaulage in einem Fahrzeug dazu führen, dass sich das vor das Fahrzeug projizierten Lichtbild senkt.

Für die Differenz bzw. Abweichung der Ist-Position IST-R2 gegenüber der Soll-Position SOLL-R2 werden durch den Verfahrensschritt 280 Steuergerätedaten für einen entsprechenden Verfahrweg als Zusatzweg für nachfolgende Positionsänderungen bestimmt und in einem Speicher gespeichert. Der Verfahrensschritt 280 kann alternativ auch innerhalb der Schritte 230 bzw. 260 erfolgen.

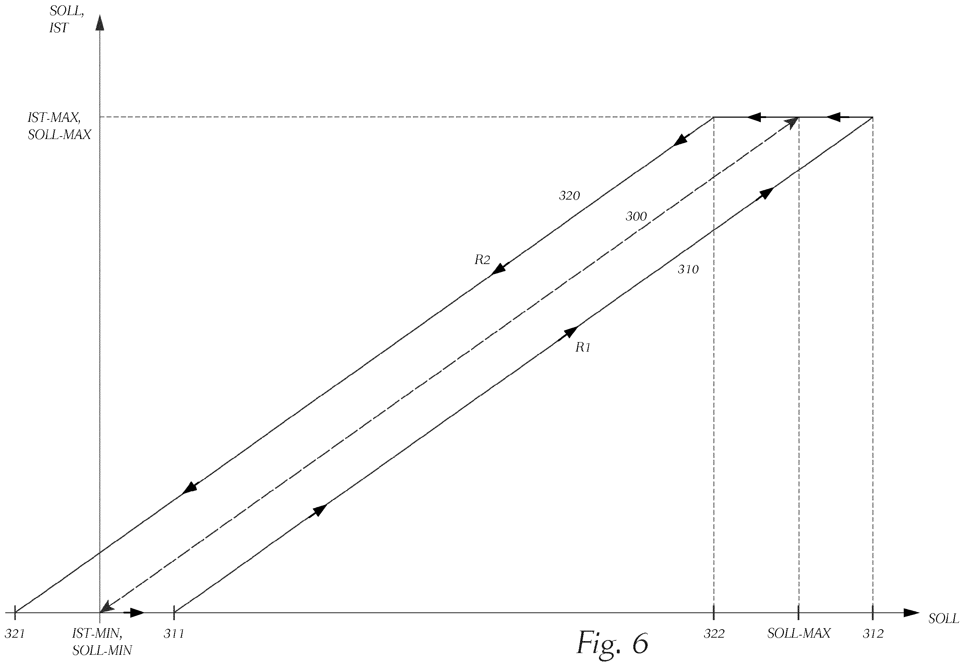

Fig. 6 zeigt die Abweichung zwischen Soll-Position SOLL (SOLL-R1 bzw. SOLL-R2) und Ist-Position IST (IST-R1 bzw. IST-R2) bezüglich einer theoretischen Kennlinie 300 aufgrund des mechanischen Spiels der Gesamtanordnung und der elektrischen Hysterese des Stellmotors 21, 41. Es ist eine Verstell-Kennlinie für eine Aufwärtsbewegung 310 in die Richtung R1, sowie eine Verstell-Kennlinie für eine Abwärtsbewegung 320 in die Richtung R2 dargestellt.

Im Einmessvorgang 200 gemäß der Fig. 4 und 5 wird der Stellmotor 21, 41 zunächst zu einem Nullpunkt, das heißt einem unteren mechanischen Anschlag des Leuchtweitenregelungs-Systems in Fig. 6 gefahren.

Ausgehend von der Nullposition, also einem Minimum der Soll-Position SOLL-MIN, verstellt sich der Stellmotor 21, 41 mit einer Soll-Position SOLL-R1 in der Aufwärtsbewegung des Einmessvorganges 200 in einer Ist-Position IST-R1 zunächst nicht, das heißt die Ist-Position IST-R1 verharrt zunächst weiterhin bei der Position SOLL-MIN. Erst bei Überschreiten einer ersten Soll-Wendeposition für Aufwärtsbewegung 311 wird die Ist-Position IST-R1 verstellt. Bei weiterem Verstellen des Stellmotor 21, 41 in der Aufwärtsbewegung folgt die Ist-Position IST-R1 weitgehend linear der Soll-Position SOLL-R1, jedoch mit einer Verschiebung, wie vorher festgestellt. Dadurch ergibt es sich, dass zum Erreichen eines Maximums der Ist-Position IST-MAX der Sollwert SOLL-R1 bis zu einer Soll-Endposition für Aufwärtsbewegung 312 weiter erhöht werden muss, also über den Grenzwert für das Maximum der Soll-Position SOLL-MAX hinaus, um die Position IST-MAX zu erreichen, die der Position SOLL-MAX entsprechen soll.

Analog dazu wird nun die Abwärtsbewegung des Einmessvorgangs 200 durchgeführt.

Ausgehend von der Position IST-MAX, also dem Maximum der Soll-Position SOLL-MAX, verstellt sich der Stellmotor 21, 41 mit einer Soll-Position SOLL-R2 in der Abwärtsbewegung des Einmessvorganges 200 in einer Ist-Position IST-R2 zunächst nicht, das heißt die Ist-Position IST-R2 verharrt zunächst weiterhin bei der Position SOLL-MAX. Erst bei Unterschreiten einer ersten Soll-Wendeposition für Abwärtsbewegung 322 wird die IST-R2-Position verstellt. Bei weiterem Verstellen des Stellmotor 21, 41 in der Abwärtsbewegung folgt die Ist-Position IST-R2 weitgehend linear der Soll-Position SOLL-R2, jedoch mit einer Verzögerung, wie vorher festgestellt. Dadurch ergibt es sich, dass zum Erreichen eines Minimums der Ist-Position IST-MIN der Sollwert SOLL-R2 bis zur Soll-Endposition für Abwärtsbewegung 321 weiter verringert werden muss, also unter den Grenzwert für das Minimum der Soll-Position SOLL-MIN, um die Position IST-MIN zu erreichen, die der Position SOLL-MIN entsprechen soll.

Häufig entspricht die Differenz zwischen der Soll-Wendeposition für Aufwärtsbewegung 311 und der Soll-Endposition für Abwärtsbewegung 321 dem Betrag der Differenz zwischen der Soll-Endposition für Aufwärtsbewegung 312 und der Soll-Wendeposition für Abwärtsbewegung 322.Außerdem verläuft der Verlauf zwischen der Soll-Wendeposition für Aufwärtsbewegung 311 und der Soll-Endposition für Aufwärtsbewegung 312, sowie der Soll-Wendeposition für Abwärtsbewegung 322 und der Soll-Endposition für Abwärtsbewegung 321 linear.

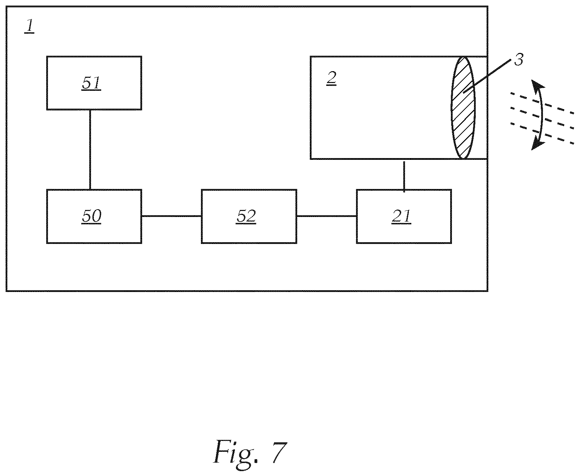

Fig. 7 zeigt den Fahrzeugscheinwerfer 1 mit einer Leuchtweitenregelung nach der Fig. 1 in einer schematischen Darstellung als Blockschaltbild. Der Fahrzeugscheinwerfer 1 zeigt das Lichtmodul 2 mit der Projektionslinse 3, sowie den Stellmotor 21, welcher dem Stellmotor 41 entsprechen kann. Der Fahrzeugscheinwerfer 1 umfasst ferner eine Steuervorrichtung 50 mit einem Speicher 51. Die Steuervorrichtung 50 ist eingerichtet, das erfindungsgemäße Verfahren auszuführen und den Stellmotor 21, vorzugsweise ein Schrittmotor, entsprechend elektrisch anzusteuern, beispielsweise mittels einer verbundenen elektronischen Schrittmotorsteuerung bzw. einer Motortreiberschaltung 52. Der Speicher 51 ist in diesem Ausführungsbeispiel vorgesehen, die Daten, welche die Hysterese beschreiben und welche zuvor durch den Einmessvorgang 200 bestimmt wurden, zu speichern. In einer Ausführungsvariante werden diese Hysteresedaten durch den Einmessvorgang 200 in einem Labor beispielsweise für eine gesamt Modellreihe des Fahrzeugscheinwerfers 1 ermittelt und im Speicher 51 gespeichert. Somit kann bei einer Fortsetzung oder einer Wiederholung des Verfahrens 100 der Einmessvorgang 200 entfallen. Stattdessen ist die Steuervorrichtung 50 eingerichtet, die Hysteresedaten aus dem Speicher 51 abzurufen und für die Ausführung des Verfahrens 100 bereitzustellen und bei Inbetriebnahme des Fahrzeugscheinwerfers 1 das Verfahren 100 mit dem Schritt 210 fortsetzen.

Liste der Bezugszeichen:
- 1: Fahrzeugscheinwerfer
- 2: Lichtmodul
- 3: Projektionslinse
- 10,30: Tragrahmen
- 20,40: Stelleinrichtung
- 31: Tragrahmen-Boden
- 12,32: Aufnahme
- 13,33: Aufhängung
- 21,41: Stellmotor
- 42: Stellstange
- 43: Kopf
- 24, 44: Aufnahmeelement
- 50: Steuervorrichtung
- 51: Speicher
- 52: Motortreiberschaltung
- 100: Verfahrensablauf im Betrieb
- 110: Feststellen einer Richtungsänderung
- 120: Ermitteln eines Korrekturwerts für Zusatzweg und ggf. Addieren des Korrekturwerts
- 130: Ausführen der Bewegung
- 140: Feststellen einer weiteren Bewegungsanforderung
- 200: Einmessvorgang
- 210: LWR-Nullposition anfahren
- 220: Bewegen der Soll-Position um Schrittweite aufwärts
- 230: Ermitteln der Ist-Position IST-R1 für die Aufwärtsbewegung, Bestimmen der Abweichung gegenüber der Soll-Position und speichern der Abweichung
- 240: Feststellen ob Ist-Position IST-R1 < SOLL-MAX-Position
- 220: Bewegen der Soll-Position um Schrittweite abwärts
- 231: Ermitteln der Ist-Position IST-R2 für die Abwärtsbewegung, Bestimmen der Abweichung gegenüber Soll-Position und speichern der Abweichung
- 240: Feststellen ob Ist-Position IST-R2 > SOLL-MIN
- 280: Berechnung der Abweichung, Steuergerätdaten erzeugen und Speichern
- 300: theoretische Verstell-Kennlinie
- 310: Verstell-Kennlinie für Aufwärtsbewegung
- 320: Verstell-Kennlinie für Abwärtsbewegung
- 311: Soll-Wendeposition für Aufwärtsbewegung
- 312: Soll-Endposition für Aufwärtsbewegung
- 322: Soll-Wendeposition für Abwärtsbewegung
- 321: Soll-Endposition für Abwärtsbewegung
- R1: Bewegungsrichtung der Aufwärtsbewegung
- R2: Bewegungsrichtung der Abwärtsbewegung
- SOLL-R1: Soll-Position für erste Richtung (Aufwärtsbewegung)
- SOLL-R2: Soll-Position für zweite Richtung (Abwärtsbewegung)
- IST-R1: Ist-Position für erste Richtung (Aufwärtsbewegung)
- IST-R2: Ist-Position für zweite Richtung (Abwärtsbewegung)
- SOLL-MIN: Soll-Minimum
- SOLL-MAX: Soll-Maximum
- IST-MIN: Soll-Minimum
- IST-MAX: Soll-Maximum
- H1, H2: Drehachse

## Patentansprüche

1. Verfahren (100) zum Verstellen einer Stelleinrichtung (20, 40) einer Komponente eines Kraftfahrzeugscheinwerfers (1), wobei die Stelleinrichtung (20, 40) von einem Stellmotor (21, 41) angetrieben ist, der dazu eingerichtet ist, zum Ausführen einer gewünschten Positionsänderung eine Verstellbewegung (130) im Ausmaß eines Verfahrweges, der der Positionsänderung entspricht, zu bewirken,
wobei in dem Falle, dass die Positionsänderung im Vergleich zu einer unmittelbar vorhergehenden Positionsänderung mit einer Richtungsumkehr der Verstellbewegung (130) einhergeht, ein gesamter Verfahrweg durchlaufen wird, der gegenüber dem der Positionsänderung entsprechenden Verfahrweg um einen Zusatzweg erhöht ist,
wobei der Zusatzweg vorab in einem Einmessvorgang (200) bestimmt wird, bei welchem der Stellmotor (21, 41) ausgehend von einer Anfangsposition in Form eines Ist-Werts IST-MIN solange um einen Verfahrweg im Ausmaß eines vorgegebenen Mindestwegs in eine erste Richtung R1 verstellt wird und dabei jede so erreichte Position mit einem Soll-Wert SOLL-R1 sowie einem entsprechenden Ist-Wert IST-R1 für die erste Richtung erfasst wird, bis eine Maximalposition IST-MAX erreicht ist, sodann der Stellmotor (21, 41) um einen Verfahrweg gemäß dem Mindestweg solange in einer zu der ersten Richtung R1 entgegengesetzten Richtung R2 zurückgestellt wird und dabei jede so erreichte Position mit einem Soll-Wert SOLL-R2 sowie einem entsprechenden Ist-Wert IST-R2 erfasst wird, bis eine Minimalposition IST-MIN erreicht ist, und für jede so erreichte Ist-Position IST-R1 und IST-R2 des Stellmotors (21, 41) bzw. der Stelleinrichtung (20, 40) Differenzen gegenüber den entsprechenden Soll-Positionen SOLL-R1 und SOLL-R2 bestimmt werden,
**dadurch gekennzeichnet, dass** aus den Differenzen zwischen den erfassten Soll-Werten SOLL-R1 bzw. SOLL-R2 und den entsprechenden Ist-Werten IST-R1 bzw. IST-R2 für die erste und zweite Richtung R1 und R2 jeweils ein Wert für den Differenzen entsprechenden Verfahrwege jeweils als Zusatzweg für nachfolgende Positionsänderungen in einem Speicher (51) gespeichert werden, und beim Ausführen des Verfahrens der Zusatzweg aus dem Speicher (51) abgerufen wird,
wobei der Einmessvorgang (200) bei verschiedenen Betriebstemperaturen oder Umgebungstemperaturen des Kraftfahrzeugscheinwerfers (1) durchgeführt wird und mehrere Repräsentationen der Zusatzwege, welche jeweils von der Betriebs- bzw. Umgebungstemperatur des Fahrzeugs, in welchem der Kraftfahrzeugscheinwerfer (1) montiert ist, abhängig sind, in dem Speicher (51) gespeichert sind und entsprechend der während des Betriebs des Fahrzeugs jeweils vorliegenden Betriebs- bzw. Umgebungstemperatur des Fahrzeugs und der jeweiligen mit dieser Temperatur verbundenen Repräsentation des Zusatzwegs von dem Speicher (51) abgerufen werden.

2. Verfahren (100) nach Anspruch 1, **dadurch gekennzeichnet, dass** die Differenzen zwischen den erfassten Soll-Werten SOLL-R1 bzw. SOLL-R2 und den entsprechenden Ist-Werten IST-R1 bzw. IST-R2 für die erste und zweite Richtung R1 und R2 jeweils eine Repräsentation der Differenzen ermittelt wird, vorzugsweise ein Mittelwert oder eine Interpolationsfunktion jeweils für die erste und zweite Richtung R1 und R2, wobei die der Repräsentation der Differenzen entsprechenden Verfahrwege als Repräsentation der Zusatzwege für nachfolgende Positionsänderungen gespeichert werden, und beim Ausführen des Verfahrens die Repräsentation der Zusatzwege aus dem Speicher (51) abgerufen wird und der jeweilige Zusatzweg aus der Repräsentation der Zusatzwege bestimmt wird.

3. Verfahren (100) nach einem der vorhergehenden Ansprüche, **dadurch gekennzeichnet, dass** das Verfahren an einem Kraftfahrzeugscheinwerfer (1), welcher einen Tragrahmen (10, 30) umfasst, wobei die Stelleinrichtung (20, 40) zum Verstellen/Verschwenken des Tragrahmens (10, 30) mit einem im Tragrahmen (10, 30) gelegenen Aufnahmeelement (24, 44) gelenkig verbunden ist, ausgeführt wird.

4. Verfahren (100) nach Anspruch 3, **dadurch gekennzeichnet, dass** das Aufnahmeelement (24, 44) durch ein im Wesentlichen U-förmiges, quer zur Verstellrichtung der Stelleinrichtung (40) länglich erstrecktes Profil gebildet ist und geeignet ist, einen Kopf (43), der durch eine Stellstange (42) mit dem Stellmotor (21, 41) verbunden ist, formschlüssig aufzunehmen und das U-förmige Profil in dessen Längserstreckung in der Einbauposition des Kraftfahrzeugscheinwerfers (1) in einem Fahrzeug im Wesentlichen vertikal ausgerichtet ist.

5. Verfahren (100) nach Anspruch 3 oder 4, **dadurch gekennzeichnet, dass** das Aufnahmeelement (24,44) eingerichtet ist bei einer Positionsänderung des Stellmotors (21, 41) den Kopf (43) der Stelleinrichtung (20, 40) vertikal innerhalb des U-förmigen Profils des Aufnahmeelements (24,44) aufwärts oder abwärts zu bewegen.

6. Verfahren (100) nach einem der Ansprüche 3 bis 5, **dadurch gekennzeichnet, dass** der Tragrahmen (10, 30) mit dem Fahrzeug über eine Aufhängung (13, 33) drehbar beziehungsweise gelenkig verbunden ist.

7. Verwendung des Verfahrens nach einem der Ansprüche 1 bis 6 für die Durchführung einer Verstellbewegung (130) einer Komponente einer Leuchtweitenregelung eines Kraftfahrzeugscheinwerfers (1).

8. Leuchtweitenregelungs-Vorrichtung eines Fahrzeugscheinwerfers (1), welche eingerichtet ist, das Verfahren zum Verstellen einer Stelleinrichtung (20, 40) einer Komponente eines Kraftfahrzeugscheinwerfers (1) gemäß einem der Ansprüche 1 bis 6 auszuführen.

## Claims

1. Method (100) for adjusting an actuator (20, 40) of a component of a motor vehicle headlamp (1), wherein the actuator (20, 40) is driven by a actuating motor (21, 41) configured to effect, in order to perform a desired position change, an adjusting movement (130) to the extent of a travel path corresponding to the position change,
wherein, in the event that the position change is accompanied by a reversal of direction of the adjusting movement (130) in comparison with an immediately preceding change in position, a total displacement path, which in comparison with the displacement path that corresponds to the position change is incremented by an additional travel, is performed,
wherein the additional travel is determined in advance during a calibration process (200), in which the actuating motor (21, 41), starting from an initial position realising an actual value IST-MIN, is displaced in a first direction R1 by a travel distance to the extent of a predetermined minimum travel distance while detecting each position thus reached is detected with a nominal value SOLL-R1 as well as a corresponding actual value IST-R1 for the first direction, until a maximum position IST-MAX is reached, then the actuating motor (21, 41) is moved back by a travel distance according to the minimum travel distance in a direction R2 opposite to the first direction R1 while detecting each position thus reached with a nominal value SOLL-R2 and a corresponding actual value IST-R2 until a minimum position IST-MIN is reached, and for each actual position IST-R1 and IST-R2 thus reached of the actuating motor (21, 41) and actuator (20, 40), respectively, of the actuating device (20, 40), differences with respect to the corresponding desired positions SOLL-R1 and SOLL-R2 are determined,
**characterised in that**, from the differences between the detected nominal values SOLL-R1 and SOLL-R2 and the corresponding actual values IST-R1 and IST-R2 for the first and second directions R1 and R2, in each case a respective value for travel paths corresponding to the differences is stored in a memory (51) as an additional travel for subsequent changes in position, and, when the method is executed, the additional travel is retrieved from the memory (51),
wherein the calibration process (200) is performed at different operating temperatures or ambient temperatures of the motor vehicle headlamp (1) and a plurality of representations of the additional travels, which are each dependent on the operating or ambient temperature of the vehicle in which the motor vehicle headlamp (1) is mounted, are stored in the memory (51) and are retrieved from the memory (51) in accordance with the respective operating or ambient temperature of the vehicle during operation of the vehicle and the respective representation of the additional travel associated with this temperature.

2. Method (100) according to claim 1, **characterised in that** the differences between the detected nominal values SOLL-R1 or SOLL-R2 and the corresponding actual values IST-R1 or IST-R2 for the first and second directions R1 and R2, respectively, a representation of the differences is determined, preferably an average value or an interpolation function for the first and second directions R1 and R2, respectively, the travel paths corresponding to the representation of the differences being stored as a representation of the additional travels for subsequent position changes, and, when the method is executed, the representation of the additional travels being retrieved from the memory (51) and the respective additional travel being determined from the representation of the additional travels.

3. Method (100) according to any one of the preceding claims, **characterised in that** the method is carried out on a motor vehicle headlamp (1) which comprises a supporting frame (10, 30), wherein the actuator (20, 40) is, for adjusting/pivoting the supporting frame (10, 30), articulately connected to a receiving element (24, 44) located in the supporting frame (10, 30).

4. Method (100) according to claim 3, **characterised in that** the receiving element (24, 44) is realized by a profile substantially having U-shape and extending longitudinally transversely to the adjustment direction of the actuator (40), and is suitable for positive receiving a head part (43) which is connected to the actuating motor (21, 41) by means of an actuating rod (42), and the profile of U-shape is oriented substantially vertical along its longitudinal extent in the mounted position of the motor vehicle headlamp (1) in a vehicle.

5. Method (100) according to claim 3 or 4, **characterised in that** the receiving element (24, 44) is configured to move, during a change of position of the actuator (21, 41), the head part (43) of the actuator (20, 40) vertically upwards or downwards within the profile of U-shape of the receiving element (24, 44).

6. Method (100) according to any one of claims 3 to 5, **characterised in that** the support frame (10, 30) is rotatably or articulately connected to the vehicle via a suspension (13, 33).

7. Use of the method according to any one of claims 1 to 6 for carrying out an adjusting movement (130) of a component of a headlamp range control of a motor vehicle headlight (1).

8. Headlamp range control device of a vehicle headlamp (1), configured to perform the method for adjusting an actuator (20, 40) of a component of a motor vehicle headlamp (1) according to any one of claims 1 to 6.

## Revendications

1. Procédé (100) de réglage d'un dispositif d'actionnement (20, 40) d'un composant d'un projecteur de véhicule automobile (1), dans lequel le dispositif d'actionnement (20, 40) est entraîné par un actionneur (21, 41) qui est conçu pour effectuer un mouvement de réglage (130) sur l'étendue d'une course correspondant au changement de position afin de réaliser un changement de position souhaité,
dans lequel, dans le cas où le changement de position est accompagné d'une inversion de direction du mouvement de déplacement (130) par rapport à un changement de position immédiatement précédent, un trajet de déplacement entier est parcouru qui est augmenté d'un trajet supplémentaire par rapport au trajet de déplacement correspondant au changement de position,
la course supplémentaire étant déterminée préalablement dans un processus d'étalonnage (200), dans lequel le actionneur (21, 41), partant d'une position initiale sous la forme d'une valeur réelle IST-MIN, est déplacé dans une première direction R1 d'une distance de déplacement jusqu'à une distance de déplacement minimale prédéterminée, et chaque position ainsi atteinte est détectée avec une valeur de consigne SOLL-R1 et une valeur réelle correspondante IST-R1 pour la première direction, jusqu'à ce qu'une position maximale IST-MAX soit atteinte, puis le actionneur (21, 41) est déplacé en arrière d'une distance de déplacement selon la distance de déplacement minimale dans une direction R2 opposée à la première direction R1, et chaque position ainsi atteinte est détectée avec une valeur de consigne SOLL-R2 et une valeur réelle correspondante IST-R2 jusqu'à ce qu'une position minimale IST-MIN soit atteinte, et pour chaque position réelle IST-R1 et IST-R2 de l'actionneur (21, 41) et du dispositif d'actionnement (20, 40) respectivement ainsi atteinte, des différences respectives sont déterminées par rapport aux positions de consigne correspondantes SOLL-R1 et SOLL-R2,
**caractérisé en ce que**, à partir des différences entre les valeurs de consigne SOLL-R1 et SOLL-R2 détectées et les valeurs réelles correspondantes IST-R1 et IST-R2 pour la première et la deuxième direction R1 et R2, une valeur respectif pour des trajets correspondant aux différences est enregistré dans une mémoire (51) comme trajet supplémentaire pour des changements de position ultérieurs et, lors de l'exécution du procédé, le trajet supplémentaire est récupéré de la mémoire (51),
le processus d'étalonnage (200) étant exécuté à différentes températures de fonctionnement ou températures ambiantes du projecteur de véhicule automobile (1), et plusieurs représentations des trajectoires supplémentaires, qui dépendent chacune de la température de fonctionnement ou ambiante du véhicule dans lequel le projecteur de véhicule automobile (1) est monté, sont enregistrées dans la mémoire (51) et sont récupérées de la mémoire (51) en fonction de la température de fonctionnement ou ambiante respective du véhicule pendant le fonctionnement du véhicule et de la représentation respective de la trajectoire supplémentaire associée à cette température.

2. Procédé (100) selon la revendication 1, **caractérisé en ce que** les différences entre les valeurs de consigne détectées SOLL-R1 ou SOLL-R2 et les valeurs réelles correspondantes IST-R1 ou IST-R2 pour la première et la deuxième température pour la première et la deuxième direction R1 et R2 une représentation respective des différences, de préférence une valeur moyenne ou une fonction d'interpolation pour la première et la deuxième direction R1 ou R2 respectivement, est déterminée, les trajets correspondant à la représentation des différences étant enregistrés en tant que représentation des trajets supplémentaires pour des changements de position ultérieurs, et, lors de l'exécution du procédé, la représentation des trajets supplémentaires étant récupérée de la mémoire (51) et le trajet supplémentaire respectif à partir de la représentation des trajets supplémentaires étant déterminé.

3. Procédé (100) selon l'une quelconque des revendications précédentes, **caractérisé en ce que** le procédé est mis en œuvre pour un projecteur de véhicule automobile (1) qui comporte un cadre porteur (10, 30), le dispositif d'actionnement (20, 40) pour le réglage/pivotement du cadre porteur (10, 30) étant relié de manière articulée à un élément de réception (24, 44) situé dans le cadre porteur (10, 30).

4. Procédé (100) selon la revendication 3, **caractérisé en ce que** l'élément de réception (24, 44) est formé par un profilé sensiblement en forme de U qui s'étend longitudinalement transversalement à la direction de réglage du dispositif d'actionnement (40) et qui est adapté pour recevoir par complémentarité de forme une tête (43) qui est reliée au moteur d'actionnement (21, 41) au moyen d'une tige d'actionnement (42), et le profilé en forme de U est orienté sensiblement verticalement dans son étendue longitudinale dans la position de montage du projecteur de véhicule automobile (1) dans un véhicule.

5. Procédé (100) selon la revendication 3 ou 4, **caractérisé en ce que** l'élément de réception (24, 44) est agencé pour déplacer la tête (43) du dispositif d'actionnement (20, 40) verticalement vers le haut ou vers le bas à l'intérieur du profil en forme de U de l'élément de réception (24, 44) lorsque la position du moteur d'actionnement (21, 41) est modifiée.

6. Procédé (100) selon l'une quelconque des revendications 3 à 5, **caractérisé en ce que** le cadre support (10, 30) est relié au véhicule de manière rotative ou articulée par une suspension (13, 33).

7. Utilisation du procédé selon l'une quelconque des revendications 1 à 6 pour effectuer un mouvement de réglage (130) d'un composant de réglage de la portée de phare d'un projecteur de véhicule automobile (1).

8. Dispositif de réglage de la portée de phare d'un projecteur de véhicule (1), qui est configuré pour mettre en œuvre le procédé de réglage d'un dispositif d'actionnement (20, 40) d'un composant d'un projecteur de véhicule automobile (1) selon l'une quelconque des revendications 1 à 6.
